(19) **Europäisches Patentamt**
**European Patent Office**
**Office européen des brevets**

(11) **EP 2 977 942 B1**

(12) **EUROPEAN PATENT SPECIFICATION**

(45) Date of publication and mention
of the grant of the patent:
**09.10.2019 Bulletin 2019/41**

(51) Int Cl.:
***G06Q 10/08*** *(2012.01)*

(21) Application number: **15173375.5**

(22) Date of filing: **23.06.2015**

(54) **METHOD AND DEVICE FOR SENDING AND RECEIVING INFORMATION ON ITEM**

VERFAHREN UND VORRICHTUNG ZUM SENDEN UND EMPFANGEN VON INFORMATIONEN
ÜBER ARTIKEL

PROCÉDÉ ET DISPOSITIF PERMETTANT D'ENVOYER ET DE RECEVOIR DES INFORMATIONS
SUR UN ARTICLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2014 CN 201410354449**

(43) Date of publication of application:
**27.01.2016 Bulletin 2016/04**

(73) Proprietor: **Xiaomi Inc.**
**Beijing 100085 (CN)**

(72) Inventors:
• **WANG, Wei**
**100085 Beijing (CN)**

• **ZHANG, Xiaodan**
**100085 Beijing (CN)**
• **YU, Yangming**
**100085 Beijing (CN)**
• **MA, Baiming**
**100085 Beijing (CN)**

(74) Representative: **Delumeau, François Guy et al**
**Cabinet Beau de Loménie**
**158, rue de l'Université**
**75340 Paris Cedex 07 (FR)**

(56) References cited:
**WO-A1-2012/091256       CN-A- 103 383 747**
**US-A1- 2007 213 888      US-A1- 2013 015 753**
**US-A1- 2014 045 433**

**Description**

**TECHNICAL FIELD**

The present disclosure relates to a field of Internet technology, and more particularly to a method and a device for sending and receiving information on an item.

**BACKGROUND**

With the improvement of people's living standard, a refrigerator has entered many families, and has become an essential home appliance for many families. Since the refrigerator has a refrigerating function, a user usually uses the refrigerator to store items. For example, the user buys vegetables, meats, eggs and beverages and other items from a supermarket or a market, in order to extend a storage time of these items, the user generally puts these items into the refrigerator to store.

In the process of implementing the present disclosure, it is found by the inventor that at least the following problems existing in the related art:

The user usually forgets some items stored in the refrigerator so that the storage time of these items stored in the refrigerator is too long, resulting in spoiling of the items due to the long storage time, or the user repeatedly buys some items because of forgetting these items stored in the refrigerator.

US 2014/045433 describes a system according to the pre-characterising portion of appended claim 1, in which a refrigerator can send, to a mobile phone, information identifying items stored in chambers of the refrigerator.

US 2013/015753 describes a refrigerator which is able to display the freshness of food.

**SUMMARY**

In order to overcome the problems in the related art, the present disclosure provides a device for sending and receiving information on an item. The invention is defined by the appended independent claims. Further embodiments are defined by the dependent claims.

**BRIEF DESCRIPTION OF THE DRAWINGS**

The accompanying drawings are used to provide further illustration of the present disclosure, and constitute a part of the present application, rather than limiting the present disclosure. In the drawings:

Fig. 1 is a flow chart of a method for sending information on an item
Fig. 2 is a flow chart of a method for receiving information on an item.
Fig. 3-1 is a flow chart of a method for sending information on item according to an exemplary embodiment.
Fig. 3-2 is a schematic diagram of a first kind of inside image according to an exemplary embodiment.
Fig. 3-3 is a schematic diagram of a second kind of inside image according to an exemplary embodiment.

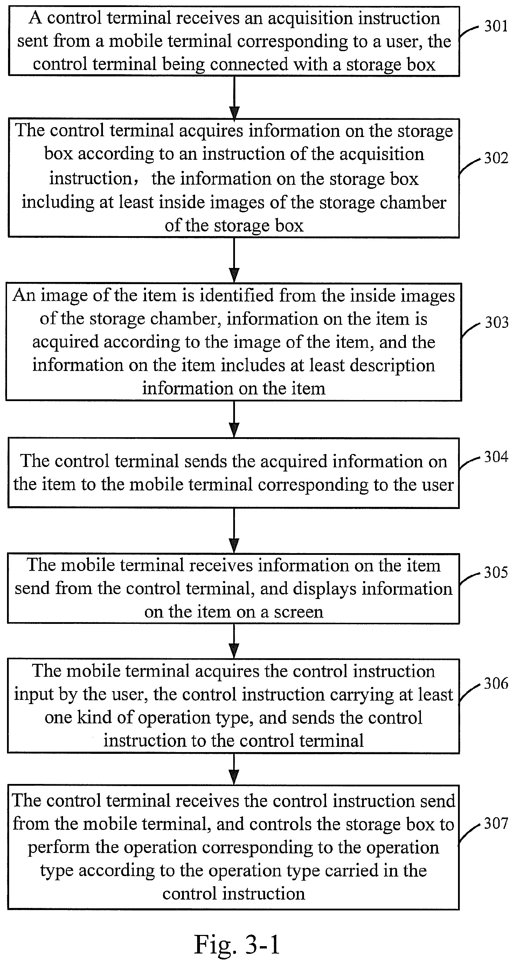

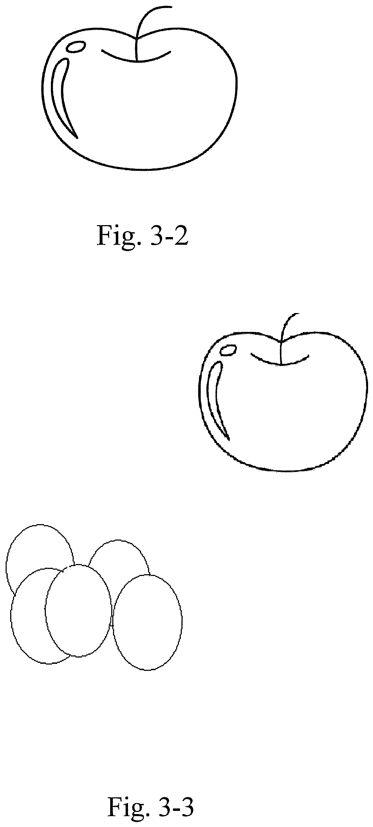

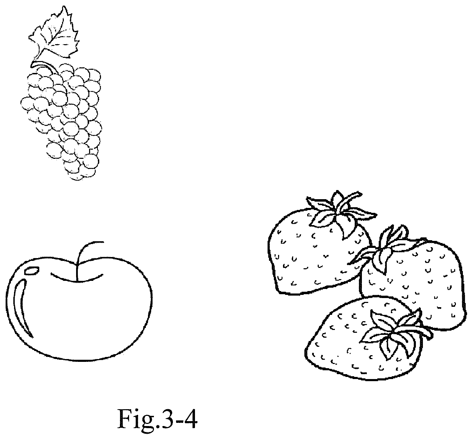

Fig. 3-4 is a schematic diagram of a third kind of inside image according to an exemplary embodiment.

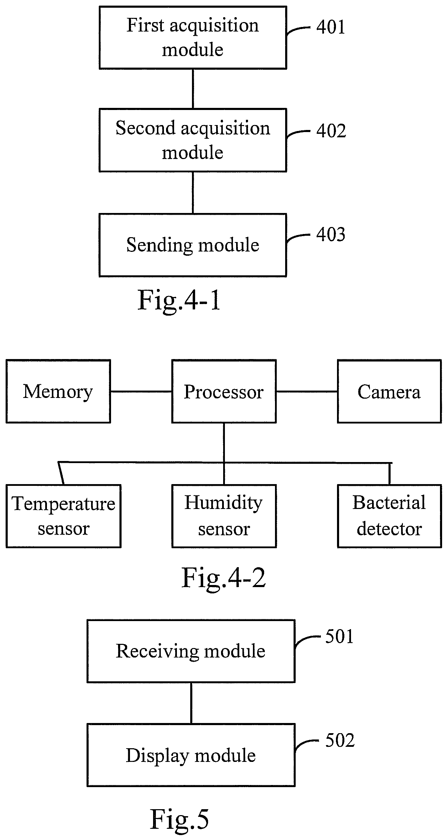

Fig. 4-1 is a block diagram of An apparatus for sending information on item according to an exemplary embodiment.
Fig. 4-2 is a structurally block diagram of a first acquisition module according to an exemplary embodiment.
Fig. 5 is a block diagram of an apparatus for receiving information on item according to an exemplary embodiment.

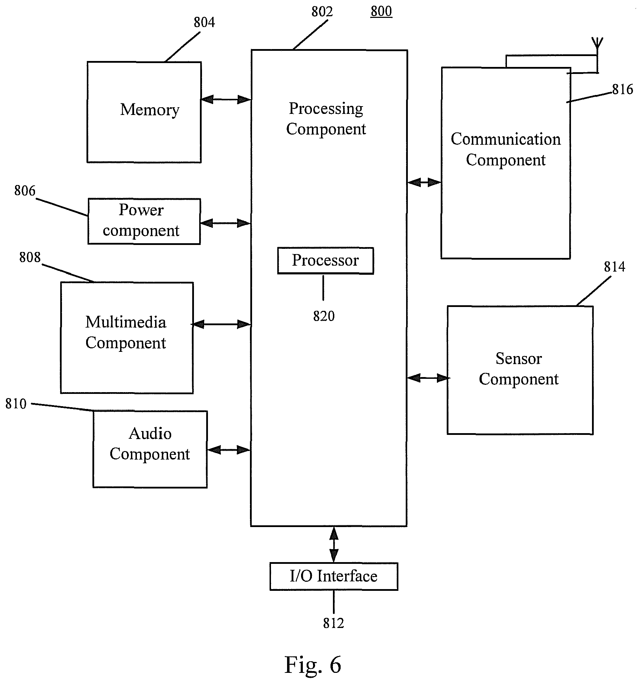

Fig. 6 is a structurally block diagram of a terminal according to an exemplary embodiment.

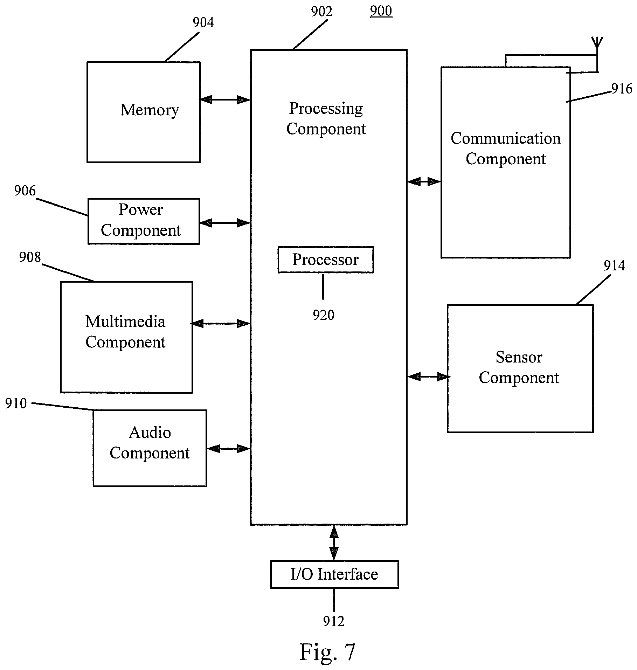

Fig. 7 is a structurally block diagram of a mobile terminal according to an exemplary embodiment.

Explicit embodiments of the present disclosure that have been illustrated in the above accompany drawings will be described in more detail hereinafter. These accompany drawings and literal description are by no means intended to limit the scope of the idea of the present disclosure, but to explain the concept of the present disclosure to those skilled in the art with reference to particular embodiments.

**DESCRIPTION OF THE EMBODIMENTS**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

A First Method

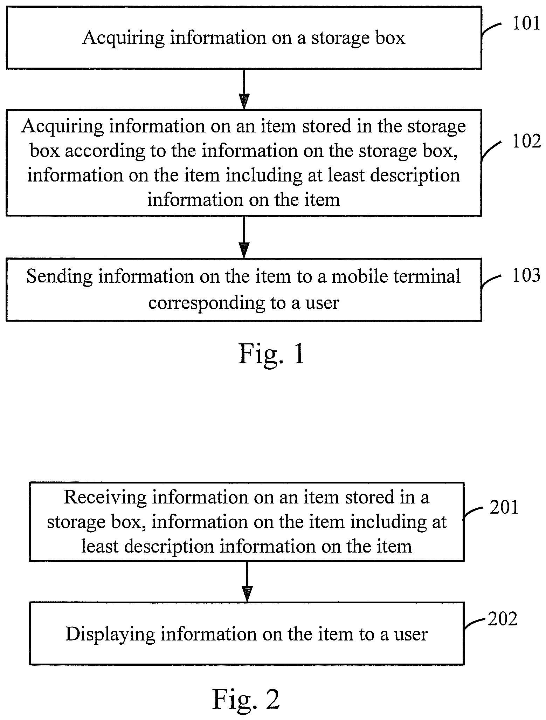

Fig. 1 is a flow chart of a method for sending information on an item. As shown in Fig. 1, the method for sending information on item is used at the terminal, comprising the following steps.

In step 101, information on a storage box is acquired.

In step 102, information on an item stored in the storage box is acquired according to the information on the storage box, the information on the item including at least description information of the item.

In step 103, the information on the item is sent to a mobile terminal corresponding to a user.

In the embodiments of the present disclosure, by acquiring information on an item stored in the storage box, the information on the item including at least description information of the item; and sending the information on the item to the mobile terminal corresponding to the user, the remote viewing and controlling to the storage box may be achieved, thereby avoiding the item stored in the storage box is forgotten by the user.

A Second Method

Fig. 2 is a flow chart of a method for receiving information on an item. As shown in Fig. 2, the method for sending information on item is used at the terminal, comprising the following steps.

In step 201, information on an item stored in a storage box is received, the information on the item including at least description information of the item.

In step 202, the information on the item is displayed to a user.

In the embodiments of the present disclosure, by receiving information on an item stored in a storage box; displaying the information on the item to the user; acquiring a control instruction input by the user, the control instruction carrying an operation type, and sending the control instruction to the storage box, so as to control the storage box to perform an operation corresponding to the operation type, the remote viewing and controlling to the storage box may be achieved, thereby avoiding the item stored in the storage box is forgotten by the user.

A Third Method (Embodiment of the Invention)

Referring to Fig. 3-1, the embodiments of the present disclosure provide a method for sending information on an item, comprising the following steps.

In step 301, a controlling terminal receives an acquisition instruction sent by a mobile terminal corresponding to a user, and the controlling terminal is connected with a storage box.

The storage box may be a refrigerator, a freezer or a wardrobe, and the like. Sometimes, a user needs to acquire the information on the item stored in the storage box. For example, taking the refrigerator as an example, when the user buys items in a supermarket, the user needs to know the items which have been stored in the refrigerator, so as to avoid repeated buying. At this time, the user may trigger the mobile terminal corresponding to the user to send the acquisition instruction to the controlling terminal connected with the refrigerator, and request the controlling terminal to acquire the information on the item in the refrigerator.

In the storage box, different storage chambers may store different kinds of items, for example, some of the storage chambers are used to store vegetables, and some of the storage chambers are used to store fruits. Sometimes, the user may only need to know the information on the item in some storage chamber. At this time, the user may input an identification of the storage chamber to be acquired to the mobile terminal, the mobile terminal carries the identification of the storage chamber to be acquired in the acquisition instruction, and then sends the acquisition instruction. For example, when the user buys vegetables in a market, the user may need to know only the information on the item in a storage chamber for storing vegetables, the user may input the identification of the storage chamber for storing vegetables to the mobile terminal, the mobile terminal carries the identification of the storage chamber for storing vegetables in the acquisition instruction, and then sends the acquisition instruction.

Alternatively, the controlling terminal may be located in the storage box, and may also be located outside the storage box. When the controlling terminal is located outside the storage box, the controlling terminal and the storage box may be connected by a home network, the home network may be wired network, wireless wifi (Wireless-FIdelity), Bluetooth or infrared, and the like. When the controlling terminal is located outside the storage box, the controlling terminal may be a router.

In step 302, the controlling terminal acquires the information on the storage box according to an instruction of the acquisition instruction.

The information on the storage box includes information associated with the storage box. For example, the information on the storage box may include inside images of the storage chamber of the storage box, or include state information of the storage box, or include the inside images and the state information of the storage chamber of the storage box, and the like.

The controlling terminal includes at least one camera, and the camera included in the controlling terminal is installed in the storage chamber of the storage box. When the controlling terminal is located outside the storage box, the camera and the controlling terminal may be connected with each other via the home network. Preferably, the cameras are respectively installed at four corners position of each storage chamber, so as to photograph images of the storage chamber in various angles and a full range.

This step may be that the controlling terminal receives the acquisition instruction sent by the mobile terminal, and control the camera to photograph the storage chamber of the storage box according to the instruction of the acquisition instruction, so as to acquire the inside images of the storage chamber of the storage box.

Preferably, the state information of the storage box comprises at least one of temperature, humidity and bacteria density of the storage chamber of the storage box. The controlling terminal further comprises at least one of a temperature sensor, a humidity sensor and a bacterial density detector. The temperature sensor may be installed in the storage chamber of the storage box, the humidity sensor may be installed in the storage chamber of the storage box, or the bacterial density detector may be installed in the storage chamber of the storage box, or any two of the temperature sensor, the humidity sensor and the bacterial density detector may be installed in the storage chamber of the storage box, or all of the temperature sensor, the humidity sensor and the bacterial density detector may be installed in the storage chamber of the storage box. Preferably, a temperature sensor, a humidity sensor and a bacterial density detector are respectively installed in each storage chamber of the storage box, so as to acquire the state information of the storage box respectively. When the controlling terminal is located outside the storage box, the controlling terminal may be connected with the temperature sensor, the humidity sensor and the bacterial density detector via the home network.

This step may be that the controlling terminal controls the temperature sensor to monitor the temperature in the storage chamber, controls the humidity sensor to monitor the humidity in the storage chamber, controls the bacterial density detector to monitor the bacterial density in the storage chamber, and acquires the temperature in the storage chamber monitored by the temperature sensor, the humidity in the storage chamber monitored by the humidity sensor and the bacterial density in the storage chamber monitored by the bacterial density detector according to the instruction of the acquisition instruction.

Preferably, if the acquisition instruction also carries an identification of the storage chamber to be acquired, the acquiring the information on the storage box of the storage chamber to be acquired according to the identification of the storage chamber to be acquired may be as follows:

The controlling terminal controls the camera located in the storage chamber to be acquired to photograph the storage chamber to be acquired, and obtains the inside images of the storage chamber to be acquired according to the identification of the storage chamber to be acquired carried by the acquisition instruction.

For example, the controlling terminal receives the identification of the storage chamber for storing vegetables carried by the acquisition instruction, and then controls the camera in the storage chamber for storing vegetables to photograph the storage chamber for storing vegetables, and obtains the inside images of the storage chamber for storing vegetables.

Preferably, if the state information of the storage chamber to be acquired is further required to be acquired, it may also be:

the controlling terminal controls the temperature sensor located in the storage chamber to be acquired to monitor the temperature in the storage chamber to be acquired, controls the humidity sensor located in the storage chamber to be acquired to monitor the humidity in the storage chamber to be acquired, and controls the bacterial density sensor located in the storage chamber to be acquired to monitor the bacterial density in the storage chamber to be acquired according to the identification of the storage chamber to be acquired carried by the acquisition instruction.

Preferably, before proceeding to this step, when a door of the storage box is opened, the controlling terminal controls the camera in the storage chamber of the storage box to photograph the storage chamber of the storage box, and acquires the photographed inside images. Preferably, the controlling terminal further comprises a memory for storing the photographed inside images in the memory.

Correspondingly, this step may be that the inside images of the storage chamber of the storage box photographed latest stored in the memory is acquired according to the instruction of the acquisition instruction.

In step 303, an image of the item is identified from inside images of the storage chamber, information on the item is acquired according to the image of the item, and the information on the item including at least description information of the item.

The description information of the item includes name and/or introduction information of the item, and the like. Before proceeding to this step, a corresponding relationship table between standard item image and description information is stored in the memory, the corresponding relationship table between the standard item image and the description information is used for storing at least one standard item image and description information corresponding to respective item.

This step may be that an image of the item is identified from the inside images of the storage chamber, the similarity between the image of the item and respective standard item image in the corresponding relationship table between the standard item image and the description information is calculated, the standard item image having the highest similarity with the image of the item is selected, the corresponding description information is acquired from the corresponding relationship table between the standard item image and the description information according to the selected standard item image, the acquired description information serves as the item description information.

For example, the corresponding relationship table between the standard item image and the description information as shown in table 1, the corresponding relationship table includes standard item images 1, 2 and 3, the standard item images 1, 2 and 3 are an apple image, a pear image and a peach image, respectively, and the description information corresponding to the standard item images 1, 2 and 3 respectively are an apple, a pear and a peach respectively.

The image of the item as shown in Figs. 3-2 is identified from the inside images of the storage box, and the identified image of the item is an apple image. The similarity between the image of the item and the standard item images 1, 2 and 3 in the table 1 is calculated respectively, wherein the standard item image 1 has the highest similarity compared with the image of the item. According to the standard item image 1, the description information "apple" corresponding to the standard item image 1 is acquired from the table 1, and the "apple" serves as the description information of the item.

Table 1

| standard item image | item description information |
|---|---|
| standard item image 1 | apple |
| standard item image 2 | pear |
| standard item image 3 | peach |

The information on the item further comprises freshness of the item, and the freshness is used to represent fresh degree of the item. In step 303, the freshness of the item may also be acquired, which comprises the following two steps.

A First step, freshness of the item stored in the storage box for the first time is acquired, wherein the first time is a time when the item is put into a refrigerator or a time when the freshness of the item is calculated latest.

When the item is put into the storage box, the current time serves as the first time of the item and a default freshness serves as the freshness of the item for the first time, and the description information of the item, the first time of the item and the freshness of the item for the first time are stored in the corresponding relationship among the item description information, the first time and the freshness. Or, when the freshness of some items is calculated, the first time of the item and the freshness of the item for the first time stored in the corresponding relationship among the item description information, the first time and the freshness are updated into the current time and the current calculated freshness. The default freshness may be the value of 100, 95 or 90 etc.

In the first step, freshness of the item for the first time is acquired from the corresponding relationship among the item description information, the first time and the freshness according to the description information of the item.

A Second step, freshness of the item is calculated according to the current time, the state information, the first time and the freshness of the item for the first time.

The freshness of the item is calculated according to the following formula:

$$X = X_0 - \frac{t_1 - t_0}{T} * A * B * \left(\frac{T_1}{T_0} T_c\right) * \left(\frac{H_1}{H_0} H_c\right) * \left(\frac{P_1}{P_0} P_c\right)$$

in the above described formula, X is the freshness of the item, $X_0$ is the freshness of the item for the first time, $t_1$ is the current time, $t_0$ is the first time, T is a length of an attenuation cycle , A is a freshness attenuation standard value in an attenuation cycle, B is an item attenuation coefficient, $T_1$ is a temperature of the storage chamber for storing the item, $T_0$ is an empirical temperature, $T_C$ is a temperature coefficient, $H_1$ is a humidity of the storage chamber for storing the item, $H_0$ is an empirical humidity, $H_C$ is a humidity coefficient, $P_1$ is a bacteria density of the storage chamber for storing the item, $P_0$ is an empirical bacteria density, and $P_C$ is a bacteria density coefficient.

Herein, A, B, $T_0$, $H_0$, $P_0$, $T_C$, $H_C$, and $P_C$ are fixed values set in advance. And preferably, may also be preset by the user.

Further, in the corresponding relationship among the item description information, the first time and the freshness, the freshness of the item for the first time is updated as the calculated freshness, and the first time of the item is updated into the current time.

It should be noted that: when the user opens the door of the storage box, the user may take out the items from the storage box or put new items into the storage box, and then close the door of the storage box. Therefore, every time the door of the storage box is closed after being opened, the corresponding relationship among the item description information, the first time and the freshness needs to be updated, comprising:

(1): When it is detected the door of the storage box is closed, the storage chamber of the storage box is photographed, and the inside images of the storage chamber are obtained;

when the user closes the door of the storage box, the controlling terminal detects that the door of the storage box is closed, and controls the camera in the storage chamber to photograph the storage chamber, the photographed images serves as the inside images of the storage chamber.

(2): description information and position information of the item stored in the storage box when the door of the storage box is closed latest are acquired;

This step may be that the description information and the position information of the item stored in the storage box when the door of the storage box is closed latest are acquired from the corresponding relationship between the description information and the position information.

For example, as shown in Fig. 3-3, the items stored in the storage box when the door of the storage box is closed latest comprise an apple and eggs. The position information of the apple is located in the northeast corner of the storage chamber, and the position information of the eggs is located in the southeast corner of the storage chamber.

(3): Items newly put into the storage box and items taken out by the user are acquired according to the inside images of the storage chamber and the description information and the position information of the items stored in the storage box when the door of the storage box is closed latest;

This step may be that the description information and the position information of each item in the current storage box are acquired according to the inside images of the storage chamber, the description information and the position information of each item in the current storage box are compared respectively with the description information and the position information of the items stored in the storage box when the door of the storage box is closed latest to obtain the items newly put into the storage box and the items taken out from the storage box.

For example, as shown in Fig. 3-4, the description information of the item in the current storage box acquired according to the inside images of the storage chamber are respectively an apple, strawberries and grapes, and the position information of the apple is the northeast corner of the storage chamber, the position information of the strawberries is southeast corner of the storage chamber, and the position information of the grapes is the northwest corner of the storage chamber; the description information and the position information of each item in the current storage box are compared with the description information and the position information of the items stored in the storage box when the door of the storage box is closed latest so as to confirm that the items newly put into the storage box are the strawberries and the grapes, and the items taken out by the user are eggs.

(4): The current time is determined as a first time of the items newly put into the storage box, and freshness of the item newly put into the storage box is set as default freshness.

(5): The item description information, the first time and the freshness for the first time of the item newly put into the storage box are stored in the corresponding relationship among the item description information, the first time and the freshness.

(6): The item description information, the first time and the freshness of the item taken out are deleted from the corresponding relationship among the item description information, the first time and the freshness.

Further, the description information and the position information of the item newly put into the storage box are stored in the corresponding relationship between the description information and the position information, and the description information and the position information of the item taken out are deleted from the corresponding relationship between the description information and the position information.

It should be noted that: after the item is put into the storage box, the freshness of the item needs to be calculated every a preset interval, and the updating the corresponding relationship among the item description information, the first time and the freshness may be as follows.

Firstly, an item that a time interval between the first time thereof and the current time reaches a preset time is acquired periodically from the corresponding relationship among the item description information, the first time and the freshness.

Secondly, state information of the current storage box is acquired, and the freshness of the current item is calculated according to the current time, the state information and the first time of the item, and the freshness of the item for the first time.

This step may be that the temperature sensor, the humidity sensor and/or the bacterial density detector located in the storage box are controlled to collect the state information of the item, and then the freshness of the current item is calculated according to the above described formula (1).

Finally, in the corresponding relationship among the item description information, the first time and the freshness, the first time of the item is updated as the current time, and the freshness of the item is updated as the freshness of the current item.

Preferably, after the freshness of the current item is calculated, the item that the freshness is lower than a preset threshold value may also be acquired, prompt information is sent to the mobile terminal corresponding to the user, the prompt information carries at least prompt content and the description information of the acquired item, for example, the prompt content may be "Hello, the freshness of the apple in the storage box is lower than the preset threshold value, and might be deteriorated, please timely treat".

In step 304, the controlling terminal sends the description information of the acquired item to the mobile terminal corresponding to the user.

Preferably, the controlling terminal may also send the inside images of the storage chamber of the storage box to the mobile terminal corresponding to the user.

Preferably, in the embodiments of the present disclosure, the controlling terminal may also periodically acquire the information on the item stored in the storage box, and send the acquired information on an item to the mobile terminal corresponding to the user, so as to inform the user of the state of each item in the storage box. That is, the information on the storage box is periodically acquired, and then the process proceed to the above described steps 303 and 304 to acquire the information on the item stored in the storage box and send the acquired information to the mobile terminal corresponding to the user.

Preferably, the controlling may send the information on the item to a router firstly by Wi-Fi, Bluetooth or infrared, and the like, and then the router sends the information on the item to the mobile terminal corresponding to the user via wired or wireless network.

In step 305, the mobile terminal receives the information on the item sent by the controlling terminal, and displays the information on the item on a screen.

Sometimes the user is not at home, but the user wants to be able to drink iced beverages after getting home. At this time, the user may control the storage box to ice the item. or, if the user wants to directly use the thawed item after getting home, the user may control the storage box to thaw the item.

The user sets a control instruction, which carries at least one kind of operation type, and then inputs the control instruction to the mobile terminal. The operation type may be an iced operation or a thawed operation.

Preferably, the control instruction carries an identification of the storage chamber to be controlled.

In step 306, the mobile terminal acquires the control instruction input by the user, which carries at least one kind of operation type, and then sends the control instruction to the controlling terminal.

In step 307, the controlling terminal receives the control instruction sent by the mobile terminal, and controls the storage box to perform the operation corresponding to the operation type according to the operation type carried in the control instruction.

This step may be that if the control instruction carries the operation type and the identification of the storage chamber to be controlled, the storage box is controlled to perform the operation corresponding to the operation type to the storage chamber to be controlled according to the operation type and the identification of the storage chamber to be controlled.

In the storage box, the items such as the beverages etc. are stored in a storage chamber, an in general, it is only required to ice the storage chamber, therefore, iced operation type and the identification of the storage chamber may be previously stored in the corresponding relationship between the operation type and the identification of the storage chamber; and in the storage box, the items required to be refrigerated storage are stored in a storage chamber for freezing, in generally, the storage chamber only needs to be thawed.

This step may be that the identification of the storage chamber corresponding to the operation type is found in the corresponding relationship between the operation type and the default identification of the storage chamber according to the operation type carried in the control instruction, and the storage box is controlled to perform the operation corresponding to the operation type to the storage chamber corresponding to the identification of the storage chamber.

The corresponding relationship between the operation type and the identification of the storage chamber may be configured by a technical person before the storage box leaves the factory, and may also be set by the user.

For example, the default storage chamber corresponding to the iced operation type is a storage chamber 1, the default storage chamber corresponding to the thaw operation type is a storage chamber 2, and then the iced operation type and the identification ID 1 of the storage chamber 1 are stored in the corresponding relationship between the operation type and the default identification of the storage chamber, the thaw operation type and the identification ID 2 of the storage chamber 2 are stored in the corresponding relationship between the operation type and the default identification of the storage chamber. Assuming that the operation type carried in the control instruction is the iced operation type, the corresponding identification ID 1 of the storage chamber 1 is acquired from the corresponding relationship between the operation type and the identification of the storage chamber according to the iced operation type, the storage chamber 1 corresponding to the storage box is controlled to perform the iced operation corresponding to the iced operation type.

In the embodiments of the present disclosure, the controlling terminal connected with the storage box receives the acquisition instruction sent by the mobile terminal, acquires the information on the storage box including at least inside images of the storage chamber of the storage box as well as temperature value, humidity value and bacterial density value; acquires the information on the item stored in the storage box, including at least the item description information as well as freshness of the item stored in the refrigerator, and sends the information on the item to the mobile terminal corresponding to the user, whereby the remote viewing and controlling to the storage box may be achieved, avoiding the item stored in the storage box is forgotten by the user.

An Apparatus for Sending Information (Embodiment of the Invention)

Based on the same technical conception, the embodiments of the present disclosure also provide an apparatus for sending information on an item, as shown in Fig. 4-1, comprising:

a first acquisition module 401 configured to acquire information on a storage box;
a second acquisition module 402 configured to acquire information on an item stored in the storage box according to the information on the storage box, the information on the item including at least description information of the item; and
a sending module 403 configured to send the information on the item to a mobile terminal corresponding to a user.

Referring to Fig. 4-2, the first acquisition module 401 may include a processor and a camera. The camera is located in the storage chamber of the storage box.

The processor is configured to control the camera to photograph the storage chamber of the storage box, so as to obtain inside images of the storage chamber of the storage box.

The information on the storage box further comprises state information of the storage box, the state information comprising at least one of temperature, humidity and bacteria density of the storage chamber of the storage box.

Preferably, the first acquisition module 401 further comprises: at least one of a temperature sensor, a humidity sensor and a bacterial detector. The temperature sensor, the humidity sensor and the bacterial detector are located in the storage chamber of the storage box.

The processor is also configured to control the humidity sensor and/or the bacterial detector to monitor the temperature, the humidity and/or the bacteria density of the storage chamber.

Preferably, the first acquisition module 401 may further comprise a memory, and the processor is also configured to store the inside images, the temperature, the humidity and/or the bacteria density of the storage chamber in the memory.

Preferably, a second acquisition module 402 comprises:

an identification unit configured to identify an image of the item from inside images of the storage chamber; and
a first acquisition unit configured to acquire description information of the item according to the image of the item.

The information on the item further comprises freshness of the item.

The second acquisition module 402 further comprises:

a second acquisition unit configured to acquire freshness of the item stored in the storage box for the first time, wherein the first time is a time when the item is put into a refrigerator or a time when the freshness of the item is calculated latest; and
a calculation unit configured to calculate freshness of the item according to current time, the state information, the first time and the freshness of the item for the first time.

Preferably, the second acquisition module 402 further comprises:
an updating unit configured to update the freshness of the item for the first time as the calculated freshness, and update the first time of the item as the current time.

Preferably, the second acquisition module 402 further comprises:

a photographing unit configured to photograph the storage chamber of the storage box to obtain inside images of the storage chamber when detecting that a door of the storage box is closed;
a third acquisition unit configured to acquire description information and position information of the item stored in the storage box when the door of the storage box is closed latest;
a fourth acquisition unit configured to acquire items newly put into the storage box according to the inside images of the storage chamber and the description information and the position information of the item stored in the storage box when the door of the storage box is closed latest; and

a determining unit configured to determine the current time as a first time of the items newly put into the storage box, and set freshness of the item newly put into the storage box for the first time as default freshness.

Preferably, the calculation unit is used for:

calculating the freshness of the item according to the following formula:

$$X = X_0 - \frac{t_1 - t_0}{T} * A * B * \left(\frac{T_1}{T_0} T_c\right) * \left(\frac{H_1}{H_0} H_c\right) * \left(\frac{P_1}{P_0} P_c\right)$$

in the above described formula, X is the freshness of the item, $X_0$ is the freshness of the item for the first time, $t_1$ is the current time, $t_0$ is the first time, T is a length of an attenuation cycle, A is a freshness attenuation standard value in an attenuation cycle, B is an item attenuation coefficient, $T_1$ is a temperature of the storage chamber for storing the item, $T_0$ is an empirical temperature, $T_C$ is a temperature coefficient, $H_1$ is a humidity of the storage chamber for storing the item, $H_0$ is an empirical humidity, $H_C$ is a humidity coefficient, $P_1$ is a bacteria density of the storage chamber for storing the item, $P_0$ is an empirical bacteria density, and $P_C$ is a bacteria density coefficient.

Preferably, the first acquisition module 401 comprises:

a fifth acquisition unit configured to receive an acquisition instruction sent by the mobile terminal corresponding to the user, and acquire the information on the storage box according to an instruction of the acquisition instruction; or

a sixth acquisition unit configured to acquire the information on the storage box periodically.

Preferably, the sending module 403 comprises:

a selection unit configured to select the item, freshness of which is lower than a preset threshold value; and

a sending unit configured to send the information on the selected item to the mobile terminal corresponding to the user.

In the embodiments of the present disclosure, by receiving the acquisition instruction sent by the mobile terminal, acquiring the information on the storage box, the information on the storage box includes at least inside images of the storage chamber of the storage box, acquiring the information on the item stored in the storage box according to the information on the storage box, the information on the item including at least description information of the item, and sending the information on the item to the mobile terminal corresponding to the user, the remote viewing and controlling to the storage box may be achieved, thereby avoiding the item stored in the storage box is forgotten by the user.

Apparatus for Receiving Information

Based on the same technical conception, there is an apparatus for receiving information on an item, as shown in Fig. 5, comprising:

a receiving module 501 configured to receive information on an item stored in a storage box, the information on the item including at least description information of the item; and

a display module 502 configured to display the information on the item to a user.

Preferably, the apparatus further comprises:
a second acquisition module configured to acquire an acquisition instruction input by the user, and send the acquisition instruction to the storage box, so that the storage box acquires and sends the information on the item stored in the storage box.

Preferably, the apparatus further comprises:

a first acquisition module configured to acquire a control instruction input by the user, the control instruction carrying an operation type; and

a sending module configured to send the control instruction to the storage box, so as to control the storage box to perform an operation corresponding to the operation type.

By receiving the information on the item stored in the storage box, displaying the information on the item to the user; acquiring the control instruction input by the user, the control instruction carrying an operation type, and sending the control instruction to the storage box, so as to control the storage box to perform an operation corresponding to the operation type, the remote viewing and controlling to the storage box may be achieved, thereby avoiding the item stored in the storage box is forgotten by the user.

A Terminal for Sending Information on an Item

Fig. 6 is a block diagram showing a terminal 800 for sending information on an item according to an exemplary embodiment. For example, the terminal 800 may be a mobile phone, a computer, a digital broadcast terminal, a messaging device, a gaming console, a tablet, a medical device, exercise equipment, a personal digital assistant and the like.

Referring to Fig. 6, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any application or method operated on the terminal 800, contact data, phonebook data, messages, pictures, videos, etc. The memory 804 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice identification mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keyboard, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as included in the memory 804, executable by the processor 820 in the terminal 800, for performing the above method. For example, the non-transitory computer-readable storage medium may be a ROM, a random access memory (RAM), a CD-ROM, a magnetic tape, a floppy disc, an optical data storage device, and the like.

A non-transitory computer readable storage medium, when instructions in the storage medium are executed by the processor of a terminal, the terminal may execute a method for sending information on item, the method comprises:

> acquiring information on a storage box;
> acquiring information on an item stored in the storage box according to the information on the storage box, the information on the item including at least description information of the item; and
> sending the information on the item to a mobile terminal corresponding to a user.

Preferably, the acquiring the information on the item of the storage box according to the information on the storage box comprising:

> identifying an image of the item from inside images of the storage chamber; and
> acquiring description information of the item according to the image of the item.

The information on the storage box further comprises state information of the storage box, the state information comprises at least one of temperature, humidity and bacteria density of the storage chamber of the storage box, the information on the item further comprises freshness of the item;
the acquiring the information on the item stored in the storage box according to the information on the storage box further comprises:

> acquiring freshness of the item stored in the storage box for the first time, the first time is a time when the item is put into a refrigerator or a time when the freshness of the item is calculated latest; and
> calculating freshness of the item according to current time, the state information, the first time and the freshness of the item for the first time.

Preferably, the method further comprises:
updating the freshness of the item for the first time as the calculated freshness, and updating the first time of the item as the current time.

Preferably, the method further comprises:

> photographing the storage chamber of the storage box to obtain inside images of the storage chamber when detecting that a door of the storage box is closed;
> acquiring description information and position information of the item stored in the storage box when the door of the storage box is closed latest;
> acquiring items newly put into the storage box according to the inside images of the storage chamber and the description information and the position information of the item stored in the storage box when the door of the storage box is closed latest; and
> determining the current time as a first time of the items newly put into the storage box, and setting freshness of the item newly put into the storage box for the first time as default freshness.

Preferably, the calculating the freshness of the item according to the current time, the state information, the first time and the freshness of the item for the first time comprising:

> calculating the freshness of the item according to the following formula:

$$X = X_0 - \frac{t_1 - t_0}{T} * A * B * \left(\frac{T_1}{T_0} T_c\right) * \left(\frac{H_1}{H_0} H_c\right) * \left(\frac{P_1}{P_0} P_c\right)$$

in the above described formula, X is the freshness of the item, $X_0$ is the freshness of the item for the first time, $t_1$ is the current time, $t_0$ is the first time, T is a length of an attenuation cycle , A is a freshness attenuation standard value in an attenuation cycle, B is an item attenuation coefficient, $T_1$ is a temperature of the storage chamber for storing the item, $T_0$ is an empirical temperature, $T_C$ is a temperature coefficient, $H_1$ is a humidity of the storage chamber for storing the item, $H_0$ is an empirical humidity, $H_C$ is a humidity coefficient, $P_1$ is a bacteria density of the storage chamber for storing the item, $P_0$ is an empirical bacteria density, and $P_C$ is a bacteria density coefficient.

Preferably, the acquiring the information on the storage box comprising:

receiving an acquisition instruction sent by the mobile terminal corresponding to the user, and acquiring the information on the storage box according to an instruction of the acquisition instruction; or
acquiring the information on the storage box periodically.

Alternatively, the sending the information on the item to the mobile terminal corresponding to the user comprising:

selecting the item, freshness of which is lower than a preset threshold value; and
sending the information on the selected item to the mobile terminal corresponding to the user.

A mobile Terminal for receiving Information on an Item

Fig. 7 is a block diagram showing a mobile terminal 900 for receiving information on item according to an exemplary embodiment. For example, the mobile terminal 900 may be a mobile phone, a computer, a digital broadcast terminal, a messaging device, a gaming console, a tablet, a medical device, exercise equipment, a personal digital assistant and the like.
Referring to Fig. 7, the mobile terminal 900 may include one or more of the following components: a processing component 902, a memory 904, a power component 906, a multimedia component 908, an audio component 910, an input/output (I/O) interface 912, a sensor component 914, and a communication component 916.
The processing component 902 usually controls overall operations of the mobile terminal 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.
The memory 904 is configured to store various types of data to support the operation of the mobile terminal 900. Examples of such data include instructions for any application or method operated on the mobile terminal 900, contact data, phonebook data, messages, pictures, videos, etc. The memory 904 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.
The power component 906 provides power to various components of the mobile terminal 900. The power component 906 may include a power management system, one or more power sources, and other components associated with the generation, management, and distribution of power in the mobile terminal 900.
The multimedia component 908 includes a screen providing an output interface between the mobile terminal 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 908 includes a front camera and/or a rear camera. The front camera and/or the rear camera may receive an external multimedia datum while the mobile terminal 900 is in an operation mode, such as a photographing mode or a video mode. Each of the front camera and the rear camera may be a fixed optical lens system or have focus and optical zoom capability.
The audio component 910 is configured to output and/or input audio signals. For example, the audio component 910 includes a microphone (MIC) configured to receive an external audio signal when the mobile terminal 900 is in an operation mode, such as a call mode, a recording mode, and a voice identification mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, a button, and the like. The button may include, but not limited to, a home button, a volume button, a starting button, and a locking button.

The sensor component 914 includes one or more sensors to provide status assessments of various aspects of the mobile terminal 900. For instance, the sensor component 914 may detect an open/closed status of the mobile terminal 900, relative positioning of components, e.g., the display and the keyboard, of the mobile terminal 900, a change in position of the mobile terminal 900 or a component of the mobile terminal 900, a presence or absence of user contact with the mobile terminal 900, an orientation or an acceleration/deceleration of the mobile terminal 900, and a change in temperature of the mobile terminal 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the mobile terminal 900 and other devices. The mobile terminal 900 can access a wireless network based on a communication standard, such as Wi-Fi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the mobile terminal 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as included in the memory 904, executable by the processor 920 in the mobile terminal 900, for performing the above method. For example, the non-transitory computer-readable storage medium may be a ROM, a random access memory (RAM), a CD-ROM, a magnetic tape, a floppy disc, an optical data storage device, and the like.

A non-transitory computer readable storage medium, when instructions in the storage medium are executed by the processor of a terminal, the terminal may execute a method for controlling a storage box, the method comprises:

receiving information on an item stored in a storage box, the information on the item including at least description information of the item; and
displaying the information on the item to a user.

Preferably, the method further comprises:
acquiring an acquisition instruction input by the user, and sending the acquisition instruction to the storage box, so that the storage box acquires and sends the information on the item stored in the storage box.

Alternatively, the method further comprises:

acquiring a control instruction input by the user, the control instruction carrying an operation type; and
sending the control instruction to the storage box, so as to control the storage box to perform an operation corresponding to the operation type.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the real range of the present disclosure are defined by the following claims.

It should be understood that the present disclosure is not limited to precise structures that are described above and shown in the accompanying drawings, and may be modified and changed without departing from the range of the present disclosure. The scope of the present disclosure is only defined by the appended claims.

**Claims**

1. A method for sending information on an item, the method comprising:

   acquiring (101) an inside image of a storage chamber of a storage box;
   acquiring (102) information on an item stored in the storage box according to the acquired inside image of the storage chamber of the storage box, the information on the item including at least description information of the item; and
   sending (103) the information on the item to a user;
   wherein, the method comprises acquiring state information of the storage box, the state information comprising at least one of temperature, humidity and bacteria density of the storage chamber of the storage box;
   the information on the item further comprises freshness of the item; and
   the acquiring of the information on the item stored in the storage box further comprises:

   acquiring freshness of the item stored in the storage box for the first time, the first time is a time when the item is put into a refrigerator or a time when the freshness of the item is calculated latest; and
   calculating freshness of the item according to current time, the state information, the first time and the freshness of the item for the first time;
   the method being **characterized in that** the information on the item is sent to a mobile terminal corresponding to the user; and **in that** the step of calculating freshness of the item comprises:

   calculating the freshness of the item according to the following formula:

$$X = X_0 - \frac{t_1 - t_0}{T} * A * B * \left( \frac{T_1}{T_0} T_c \right) * \left( \frac{H_1}{H_0} H_c \right) * \left( \frac{P_1}{P_0} P_c \right)$$

   where, X is the freshness of the item, $X_0$ is the freshness of the item for the first time, $t_1$ is the current time, $t_0$ is the first time, T is a length of an attenuation cycle , A is a freshness attenuation standard value in an attenuation cycle, B is an item attenuation coefficient, $T_1$ is a temperature of the storage chamber for storing the item, $T_0$ is an empirical temperature, $T_C$ is a temperature coefficient, $H_1$ is a humidity of the storage chamber for storing the item, $H_0$ is an empirical humidity, $H_C$ is a humidity coefficient, $P_1$ is a bacteria density of the storage chamber for storing the item, and $P_0$ is an empirical bacteria density, and $P_C$ is a bacteria density coefficient.

2. The method according to claim 1, **characterized in that**, the acquiring of the information on the item of the storage box according to the acquired inside image of the storage chamber of the storage box comprises:

   identifying (303) an image of the item from the acquired inside image of the storage chamber of the storage box; and
   acquiring description information of the item according to the image of the item.

3. The method according to claim 1 or 2, **characterized in that**, the method further comprises:

   updating the freshness of the item for the first time as the calculated freshness, and updating the first time of the item as the current time.

4. The method according to any one of claims 1 to 3, **characterized in that**, the method further comprises:

   photographing the storage chamber of the storage box to obtain inside images of the storage chamber when detecting that a door of the storage box is closed;
   acquiring description information and position information of the item stored in the storage box when the door of the storage box is closed latest;
   acquiring items newly put into the storage box according to the inside images of the storage chamber and the description information and the position information of the item stored in the storage box when the door of the storage box is closed latest; and
   determining the current time as a first time of the items newly put into the storage box, and setting freshness of the item newly put into the storage box for the first time as default freshness.

5. The method according to any one of claims 1 to 4, **characterized in that**, the method further comprises:

   receiving an acquisition instruction sent by the mobile terminal corresponding to the user, and acquiring the inside image of the storage chamber of the storage box according to an instruction of the acquisition instruction; or acquiring the inside image of the storage chamber of the storage box periodically.

6. An apparatus for sending information on item, wherein, the apparatus comprises:

   a first acquisition module (401) configured to acquire an inside image of a storage chamber of a storage box; a second acquisition module (402) configured to acquire information on an item stored in the storage box according to the inside image of the storage chamber of the storage box, the information on the item including at least description information of the item; and
   a sending module (403) configured to send the information on the item to a user;
   wherein, the apparatus comprises a module to acquire state information of the storage box, the state information comprising at least one of temperature, humidity and bacteria density of the storage chamber of the storage box; the information on the item further comprises freshness of the item; and
   the second acquisition module (402) further comprises:

   a second acquisition unit configured to acquire freshness of the item stored in the storage box for the first time, the first time is a time when the item is put into a refrigerator or a time when the freshness of the item is calculated latest; and
   a calculation unit configured to calculate freshness of the item according to current time, the state information, the first time and the freshness of the item for the first time;

   the apparatus being **characterized in that** the sending module (403) is configured to send the information on the item to a mobile terminal corresponding to the user;
   and **in that** the calculation unit is further configured to calculate the freshness of the item according to the following formula:

$$X = X_0 - \frac{t_1 - t_0}{T} * A * B * \left(\frac{T_1}{T_0} T_c\right) * \left(\frac{H_1}{H_0} H_c\right) * \left(\frac{P_1}{P_0} P_c\right)$$

   where, X is the freshness of the item, $X_0$ is the freshness of the item for the first time, $t_1$ is the current time, $t_0$ is the first time, T is a length of an attenuation cycle , A is a freshness attenuation standard value in an attenuation cycle, B is an item attenuation coefficient, $T_1$ is a temperature of the storage chamber for storing the item, $T_0$ is an empirical temperature, $T_C$ is a temperature coefficient, $H_1$ is a humidity of the storage chamber for storing the item, $H_0$ is an empirical humidity, $H_C$ is a humidity coefficient, $P_1$ is a bacteria density of the storage chamber for storing the item, and $P_0$ is an empirical bacteria density, and $P_C$ is a bacteria density coefficient.

7. The apparatus according to claim 6, **characterized in that**, the second acquisition module further comprises:
   an updating unit configured to update the freshness of the item for the first time as the calculated freshness, and update the first time of the item as the current time.

8. The apparatus according to claim 6 or 7, **characterized in that**, the second acquisition module further comprises:

   a photographing unit configured to photograph the storage chamber of the storage box to obtain inside images of the storage chamber when detecting that a door of the storage box is closed;
   a third acquisition unit configured to acquire description information and position information of the item stored in the storage box when the door of the storage box is closed latest;
   a fourth acquisition unit configured to acquire items newly put into the storage box according to the inside images of the storage chamber and the description information and the position information of the item stored in the storage box when the door of the storage box is closed latest; and
   a determining unit configured to determine the current time as a first time of the items newly put into the storage box, and set freshness of the item newly put into the storage box for the first time as default freshness.

9. A computer program including instructions for executing the steps of a method for sending information on item according to any one of claims 1 to 5 when said program is executed by a computer.

**10.** A recording medium readable by a computer and having recorded thereon a computer program including instructions for executing the steps of a method for sending information on item according to any one of claims 1 to 5.

**Patentansprüche**

**1.** Verfahren zum Senden von Informationen über einen Gegenstand, wobei das Verfahren umfasst:

Erlangen (101) eines Bildes des Inneren einer Aufbewahrungskammer einer Aufbewahrungsbox,
Erlangen (102) von Informationen über einen Gegenstand, der in der Aufbewahrungsbox aufbewahrt wird, gemäß dem erlangten Bild des Inneren der Aufbewahrungskammer der Aufbewahrungsbox, wobei die Informationen über den Gegenstand zumindest Beschreibungsinformationen des Gegenstandes beinhalten, und Senden (103) der Informationen über den Gegenstand an einen Benutzer,
wobei das Verfahren das Erlangen von Zustandsinformationen der Aufbewahrungsbox umfasst, wobei die Zustandsinformationen wenigstens eines von einer Temperatur, Feuchtigkeit und Bakteriendichte der Aufbewahrungskammer der Aufbewahrungsbox umfassen,
die Informationen über den Gegenstand ferner eine Frische des Gegenstands umfassen und
das Erlangen der Informationen über den Gegenstand, der in der Aufbewahrungsbox aufbewahrt wird, ferner umfasst:

Erlangen einer Frische des Gegenstands, der in der Aufbewahrungsbox aufbewahrt wird, zu der ersten Zeit, wobei die erste Zeit eine Zeit, zu welcher der Gegenstand in einen Kühlschrank gelegt wird, oder eine Zeit ist, zu welcher die Frische des Gegenstands zuletzt berechnet wurde, und
Berechnen einer Frische des Gegenstands gemäß der aktuellen Zeit, den Zustandsinformationen, der ersten Zeit und der Frische des Gegenstands zu der ersten Zeit,

wobei das Verfahren **dadurch gekennzeichnet ist, dass** die Informationen über den Gegenstand an ein mobiles Endgerät gesendet werden, welches dem Benutzer entspricht, und dadurch, dass der Schritt des Berechnens einer Frische des Gegenstands umfasst:
Berechnen der Frische des Gegenstands gemäß der folgenden Formel:

$$X = X_0 - \frac{t_1 - t_0}{T} * A * B * \left(\frac{T_1}{T_0} T_c\right) * \left(\frac{H_1}{H_0} H_c\right) * \left(\frac{P_1}{P_0} P_c\right)$$

wobei X die Frische des Gegenstands ist, $X_0$ die Frische des Gegenstands bei der ersten Zeit ist, $t_1$ die aktuelle Zeit ist, $t_0$ die erste Zeit ist, T eine Länge eines Verminderungszyklus ist, A ein Frischeverminderungs-Standardwert in einem Verminderungszyklus ist, B ein Verminderungskoeffizient des Gegenstands ist, $T_1$ eine Temperatur der Aufbewahrungskammer zum Aufbewahren des Gegenstands ist, $T_0$ eine empirische Temperatur ist, $T_C$ ein Temperaturkoeffizient ist, $H_1$ eine Feuchtigkeit der Aufbewahrungskammer zum Aufbewahren des Gegenstands ist, $H_0$ eine empirische Feuchtigkeit ist, $H_C$ ein Feuchtigkeitskoeffizient ist, $P_1$ eine Bakteriendichte der Aufbewahrungskammer zum Aufbewahren des Gegenstands ist und $P_0$ eine empirische Bakteriendichte ist und $P_C$ ein Bakteriendichte-Koeffizient ist.

**2.** Verfahren nach Anspruch 1, **dadurch gekennzeichnet, dass** das Erlangen der Informationen über den Gegenstand der Aufbewahrungsbox gemäß dem erlangten Bild des Inneren der Aufbewahrungskammer der Aufbewahrungsbox umfasst:

Identifizieren (303) eines Bildes des Gegenstands aus dem erlangten Bild des Inneren der Aufbewahrungskammer der Aufbewahrungsbox und
Erlangen von Beschreibungsinformationen des Gegenstands gemäß dem Bild des Gegenstands.

**3.** Verfahren nach Anspruch 1 oder 2, **dadurch gekennzeichnet, dass** das Verfahren ferner umfasst:
Aktualisieren der Frische des Gegenstands zu der ersten Zeit als die berechnete Frische und Aktualisieren der ersten Zeit des Gegenstands als die aktuelle Zeit.

**4.** Verfahren nach einem der Ansprüche 1 bis 3, **dadurch gekennzeichnet, dass** das Verfahren ferner umfasst:

Fotografieren der Aufbewahrungskammer der Aufbewahrungsbox, um Bilder des Inneren der Aufbewahrungskammer zu erhalten, wenn detektiert wird, dass eine Tür der Aufbewahrungsbox geschlossen ist,

Erlangen von Beschreibungsinformationen und Positionsinformationen des Gegenstands, der in der Aufbewahrungsbox aufbewahrt wird, wenn die Tür der Aufbewahrungsbox zuletzt geschlossen wurde,

Erlangen von Gegenständen, die neu in die Aufbewahrungsbox gelegt wurden, gemäß den Bildern des Inneren der Aufbewahrungskammer und den Beschreibungsinformationen und den Positionsinformationen des Gegenstands, der in der Aufbewahrungsbox aufbewahrt wird, wenn die Tür der Aufbewahrungsbox zuletzt geschlossen wurde, und

Bestimmen der aktuellen Zeit als eine erste Zeit der Gegenstände, die neu in die Aufbewahrungsbox gelegt wurden, und Festlegen einer Frische des Gegenstands, der neu in die Aufbewahrungsbox gelegt wurde, zu der ersten Zeit als Standardfrische.

5. Verfahren nach einem der Ansprüche 1 bis 4, **dadurch gekennzeichnet, dass** das Verfahren ferner umfasst:

Empfangen einer Erlangungsanweisung, die durch das mobile Endgerät gesendet wurde, das dem Benutzer entspricht, und Erlangen des Bildes des Inneren der Aufbewahrungskammer der Aufbewahrungsbox gemäß einer Anweisung der Erlangungsanweisung, oder

periodisches Erlangen des Bildes des Inneren der Aufbewahrungskammer der Aufbewahrungsbox.

6. Vorrichtung zum Senden von Informationen über einen Gegenstand, wobei die Vorrichtung umfasst:

ein erstes Erlangungsmodul (401), das dazu ausgestaltet ist, ein Bild des Inneren einer Aufbewahrungskammer einer Aufbewahrungsbox zu erlangen,

ein zweites Erlangungsmodul (402), das dazu ausgestaltet ist, Informationen über einen Gegenstand, der in der Aufbewahrungsbox aufbewahrt wird, gemäß dem Bild des Inneren der Aufbewahrungskammer der Aufbewahrungsbox zu erlangen, wobei die Informationen über den Gegenstand zumindest Beschreibungsinformationen des Gegenstandes beinhalten, und

ein Sendemodul (403), das dazu ausgestaltet ist, die Informationen über den Gegenstand an einen Benutzer zu senden,

wobei die Vorrichtung ein Modul zum Erlangen von Zustandsinformationen der Aufbewahrungsbox umfasst, wobei die Zustandsinformationen wenigstens eines von einer Temperatur, Feuchtigkeit und Bakteriendichte der Aufbewahrungskammer der Aufbewahrungsbox umfassen,

die Informationen über den Gegenstand ferner eine Frische des Gegenstands umfassen und

das zweite Erlangungsmodul (402) ferner umfasst:

eine zweite Erlangungseinheit, die dazu ausgestaltet ist, eine Frische des Gegenstands, der in der Aufbewahrungsbox aufbewahrt wird, zu der ersten Zeit zu erlangen, wobei die erste Zeit eine Zeit, zu welcher der Gegenstand in einen Kühlschrank gelegt wird, oder eine Zeit ist, zu welcher die Frische des Gegenstands zuletzt berechnet wurde, und

eine Berechnungseinheit, die dazu ausgestaltet ist, eine Frische des Gegenstands gemäß der aktuellen Zeit, den Zustandsinformationen, der ersten Zeit und der Frische des Gegenstands zu der ersten Zeit zu berechnen,

wobei die Vorrichtung **dadurch gekennzeichnet ist, dass** das Sendemodul (403) dazu ausgestaltet ist, die Informationen über den Gegenstand an ein mobiles Endgerät zu senden, welches dem Benutzer entspricht, und dadurch, dass die Berechnungseinheit ferner dazu ausgestaltet ist, die Frische des Gegenstands gemäß der folgenden Formel zu berechnen:

$$X = X_0 - \frac{t_1 - t_0}{T} * A * B * \left(\frac{T_1}{T_0} T_C\right) * \left(\frac{H_1}{H_0} H_C\right) * \left(\frac{P_1}{P_0} P_C\right)$$

wobei X die Frische des Gegenstands ist, $X_0$ die Frische des Gegenstands bei der ersten Zeit ist, $t_1$ die aktuelle Zeit ist, $t_0$ die erste Zeit ist, T eine Länge eines Verminderungszyklus ist, A ein Frischeverminderungs-Standardwert in einem Verminderungszyklus ist, B ein Verminderungskoeffizient des Gegenstands ist, $T_1$ eine Temperatur der Aufbewahrungskammer zum Aufbewahren des Gegenstands ist, $T_0$ eine empirische Temperatur ist, $T_C$ ein Temperaturkoeffizient ist, $H_1$ eine Feuchtigkeit der Aufbewahrungskammer zum Aufbewahren des Gegenstands ist, $H_0$ eine empirische Feuchtigkeit ist, $H_C$ ein Feuchtigkeitskoeffizient ist, $P_1$ eine Bakteriendichte

der Aufbewahrungskammer zum Aufbewahren des Gegenstands ist und $P_0$ eine empirische Bakteriendichte ist und $P_C$ ein Bakteriendichte-Koeffizient ist.

7. Vorrichtung nach Anspruch 6, **dadurch gekennzeichnet, dass** das zweite Erlangungsmodul ferner umfasst:
   eine Aktualisierungseinheit, die dazu ausgestaltet ist, die Frische des Gegenstands zu der ersten Zeit als die berechnete Frische zu aktualisieren und die erste Zeit des Gegenstands als die aktuelle Zeit zu aktualisieren.

8. Vorrichtung nach Anspruch 6 oder 7, **dadurch gekennzeichnet, dass** das zweite Erlangungsmodul ferner umfasst:

   eine Fotografiereinheit, die dazu ausgestaltet ist, die Aufbewahrungskammer der Aufbewahrungsbox zu fotografieren, um Bilder des Inneren der Aufbewahrungskammer zu erhalten, wenn detektiert wird, dass eine Tür der Aufbewahrungsbox geschlossen ist,
   eine dritte Erlangungseinheit, die dazu ausgestaltet ist, Beschreibungsinformationen und Positionsinformationen des Gegenstands, der in der Aufbewahrungsbox aufbewahrt wird, zu erlangen, wenn die Tür der Aufbewahrungsbox zuletzt geschlossen wurde,
   eine vierte Erlangungseinheit, die dazu ausgestaltet ist, Gegenstände, die neu in die Aufbewahrungsbox gelegt wurden, gemäß den Bildern des Inneren der Aufbewahrungskammer und den Beschreibungsinformationen und den Positionsinformationen des Gegenstands, der in der Aufbewahrungsbox aufbewahrt wird, zu erlangen, wenn die Tür der Aufbewahrungsbox zuletzt geschlossen wurde, und
   eine Bestimmungseinheit, die dazu ausgestaltet ist, die aktuelle Zeit als eine erste Zeit der Gegenstände, die neu in die Aufbewahrungsbox gelegt wurden, zu bestimmen und eine Frische des Gegenstands, der neu in die Aufbewahrungsbox gelegt wurde, zu der ersten Zeit als Standardfrische festzulegen.

9. Computerprogramm, das Anweisungen zum Ausführen der Schritte eines Verfahrens zum Senden von Informationen über einen Gegenstand nach einem der Ansprüche 1 bis 5 beinhaltet, wenn das Programm von einem Computer ausgeführt wird.

10. Aufzeichnungsmedium, das von einem Computer gelesen werden kann und auf dem ein Computerprogramm gespeichert ist, das Anweisungen zum Ausführen der Schritte eines Verfahrens zum Senden von Informationen über einen Gegenstand nach einem der Ansprüche 1 bis 5 beinhaltet.

**Revendications**

1. Procédé pour l'envoi d'informations sur un article, ce procédé comprenant :

   l'acquisition (101) d'une image interne d'une chambre de stockage d'une boîte de stockage ;
   l'acquisition (102) d'informations sur un article stocké dans la boîte de stockage selon l'image interne acquise de la chambre de stockage de la boîte de stockage, les informations sur l'article comprenant au moins des informations de description de l'article ; et
   l'envoi (103) des informations sur l'article à un utilisateur ;
   le procédé comprenant l'acquisition d'informations d'état de la boîte de stockage, les informations d'état comprenant au moins un parmi la température, l'humidité et la densité de bactéries de la chambre de stockage de la boîte de stockage ;
   les informations sur l'article comprenant en outre la fraîcheur de l'article ; et
   l'acquisition des informations sur l'article stocké dans la boîte de stockage comprenant en outre :

      l'acquisition de la fraîcheur de l'article stocké dans la boîte de stockage pendant le premier temps, le premier temps étant un temps où l'article est mis dans un réfrigérateur ou un temps où la fraîcheur de l'article est calculée en dernier ; et
      le calcul de la fraîcheur de l'article selon le temps actuel, les informations d'état, le premier temps et la fraîcheur de l'article pendant le premier temps ;

   ce procédé étant **caractérisé en ce que** les informations sur l'article sont envoyées à un terminal mobile correspondant à l'utilisateur ; et **en ce que** l'étape de calcul de la fraîcheur de l'article comprend :

      le calcul de la fraîcheur de l'article selon la formule suivante :

$$X = X_0 - \frac{t_1 - t_0}{T} * A * B * \left(\frac{T_1}{T_0} T_c\right) * \left(\frac{H_1}{H_0} H_c\right) * \left(\frac{P_1}{P_0} P_c\right)$$

X étant la fraîcheur de l'article, $X_0$ étant la fraîcheur de l'article pendant le premier temps, $t_1$ étant le temps actuel, $t_0$ étant le premier temps, T étant une longueur d'un cycle d'atténuation, A étant une valeur standard d'atténuation de fraîcheur dans un cycle d'atténuation, B étant un coefficient d'atténuation d'article, $T_1$ étant une température de la chambre de stockage pour le stockage de l'article, $T_0$ étant une température empirique, $T_C$ étant un coefficient de température, $H_1$ étant une humidité de la chambre de stockage pour le stockage de l'article, $H_0$ étant une humidité empirique, $H_C$ étant un coefficient d'humidité, $P_1$ étant une densité de bactéries de la chambre de stockage pour le stockage de l'article, et $P_0$ étant une densité de bactéries empirique et $P_C$ étant un coefficient de densité de bactéries.

2. Procédé selon la revendication 1, **caractérisé en ce que** l'acquisition des informations sur l'article de la boîte de stockage selon l'image interne acquise de la chambre de stockage de la boîte de stockage comprend :

l'identification (303) d'une image de l'article à partir de l'image interne acquise de la chambre de stockage de la boîte de stockage ; et
l'acquisition d'informations de description de l'article selon l'image de l'article.

3. Procédé selon la revendication 1 ou 2, **caractérisé en ce que** ce procédé comprend en outre :
la mise à jour de la fraîcheur de l'article pendant le premier temps comme la fraîcheur calculée et la mise à jour du premier temps de l'article comme le temps actuel.

4. Procédé selon l'une des revendications 1 à 3, **caractérisé en ce que** ce procédé comprend en outre :

la photographie de la chambre de stockage de la boîte de stockage pour obtenir des images internes de la chambre de stockage lors de la détection qu'une porte de la boîte de stockage est fermée ;
l'acquisition d'informations de description et d'informations de position de l'article stocké dans la boîte de stockage lorsque la porte de la boîte de stockage est fermée en dernier ;
l'acquisition d'articles nouvellement placés dans la boîte de stockage selon les images internes de la chambre de stockage et des informations de description et des informations de position de l'article stocké dans la boîte de stockage lorsque la porte de la boîte de stockage est fermée en dernier ; et
la détermination du temps actuel comme un premier temps des articles nouvellement placés dans la boîte de stockage et le réglage de la fraîcheur de l'article nouvellement placé dans la boîte de stockage pendant le premier temps comme la fraîcheur par défaut.

5. Procédé selon l'une des revendications 1 à 4, **caractérisé en ce que** ce procédé comprend en outre :

la réception d'une instruction d'acquisition envoyée par le terminal mobile correspondant à l'utilisateur et l'acquisition de l'image interne de la chambre de stockage de la boîte de stockage selon une instruction de l'instruction d'acquisition ; ou
l'acquisition de l'image interne de la chambre de stockage de la boîte de stockage périodiquement.

6. Appareil pour l'envoi d'informations sur un article, l'appareil comprenant :

un premier module d'acquisition (401) conçu pour acquérir une image interne d'une chambre de stockage d'une boîte de stockage ;
un deuxième module d'acquisition (402) conçu pour acquérir des informations sur un article stocké dans la boîte de stockage selon l'image interne de la chambre de stockage de la boîte de stockage, les informations sur l'article comprenant au moins des informations de description de l'article ; et
un module d'envoi (403) conçu pour envoyer les informations sur l'article à un utilisateur ;
l'appareil comprenant un module pour acquérir des informations d'état de la boîte de stockage, les informations d'état comprenant au moins une parmi une température, une humidité, et une densité de bactéries de la chambre de stockage de la boîte de stockage ;
les informations sur l'article comprenant en outre la fraîcheur de l'article ; et
le deuxième module d'acquisition (402) comprenant en outre :

une deuxième unité d'acquisition conçue pour acquérir la fraîcheur de l'article stocké dans la boîte de stockage pendant le premier temps, le premier temps est un temps où l'article est placé dans un réfrigérateur ou un temps où la fraîcheur de l'article est calculée en dernier ; et
une unité de calcul conçue pour calculer la fraîcheur de l'article selon le temps actuel, les informations d'état, le premier temps et la fraîcheur de l'article pour le premier temps ;

l'appareil étant **caractérisé en ce que** le module d'envoi (403) est conçu pour envoyer les informations sur l'article à un terminal mobile correspondant à l'utilisateur ;
et **en ce que** l'unité de calcul est en outre conçue pour calculer la fraîcheur de l'article selon la formule suivante :

$$X = X_0 - \frac{t_1 - t_0}{T} * A * B * \left(\frac{T_1}{T_0} T_C\right) * \left(\frac{H_1}{H_0} H_C\right) * \left(\frac{P_1}{P_0} P_C\right)$$

X étant la fraîcheur de l'article, $X_0$ étant la fraîcheur de l'article pendant le premier temps, $t_1$ étant le temps actuel, $t_0$ étant le premier temps, T étant une longueur d'un cycle d'atténuation, A étant une valeur standard d'atténuation de fraîcheur dans un cycle d'atténuation, B étant un coefficient d'atténuation d'article, $T_1$ étant une température de la chambre de stockage pour le stockage de l'article, $T_0$ étant une température empirique, $T_C$ étant un coefficient de température, $H_1$ étant une humidité de la chambre de stockage pour le stockage de l'article, $H_0$ étant une humidité empirique, $H_C$ étant un coefficient d'humidité, $P_1$ étant une densité de bactéries de la chambre de stockage pour le stockage de l'article, et $P_0$ étant une densité de bactéries empirique et $P_C$ étant un coefficient de densité de bactéries.

7. Appareil selon la revendication 6, **caractérisé en ce que** le deuxième module d'acquisition comprend en outre :
une unité de mise à jour conçue pour mettre à jour la fraîcheur de l'article pendant le premier temps comme la fraîcheur calculée et mettre à jour le premier temps de l'article comme le temps actuel.

8. Appareil selon la revendication 6 ou 7, **caractérisé en ce que** le deuxième module d'acquisition comprend en outre :

une unité de photographie conçue pour photographier la chambre de stockage de la boîte de stockage pour obtenir des images internes de la chambre de stockage lors de la détection qu'une porte de la boîte de stockage est fermée ;
une troisième unité d'acquisition conçue pour acquérir des informations de description et des informations de position de l'article stocké dans la boîte de stockage lorsque la porte de la boîte de stockage est fermée en dernier ;
une quatrième unité d'acquisition conçue des articles nouvellement placés dans la boîte de stockage selon les images internes de la chambre de stockage et les informations de description et les informations de position de l'article stocké dans la boîte de stockage lorsque la porte de la boîte de stockage est fermée en dernier ; et
une unité de détermination conçue pour déterminer le temps actuel comme un premier temps des articles nouvellement placés dans la boîte de stockage et régler la fraîcheur de l'article nouvellement placé dans la boîte de stockage pendant le premier temps comme la fraîcheur par défaut.

9. Programme informatique comprenant des instructions pour l'exécution des étapes d'un procédé pour l'envoi d'informations sur un article selon l'une des revendications 1 à 5 lorsque ledit programme est exécuté par un ordinateur.

10. Support d'enregistrement lisible par un ordinateur et comprenant un programme informatique enregistré dessus, comprenant des instructions pour l'exécution des étapes d'un procédé pour l'envoi d'informations sur un article selon l'une des revendications 1 à 5.

| Acquiring information on a storage box | — 101 |

↓

| Acquiring information on an item stored in the storage box according to the information on the storage box, information on the item including at least description information on the item | — 102 |

↓

| Sending information on the item to a mobile terminal corresponding to a user | — 103 |

## Fig. 1

| Receiving information on an item stored in a storage box, information on the item including at least description information on the item | — 201 |

↓

| Displaying information on the item to a user | — 202 |

## Fig. 2

A control terminal receives an acquisition instruction sent from a mobile terminal corresponding to a user, the control terminal being connected with a storage box — 301

The control terminal acquires information on the storage box according to an instruction of the acquisition instruction, the information on the storage box including at least inside images of the storage chamber of the storage box — 302

An image of the item is identified from the inside images of the storage chamber, information on the item is acquired according to the image of the item, and the information on the item includes at least description information on the item — 303

The control terminal sends the acquired information on the item to the mobile terminal corresponding to the user — 304

The mobile terminal receives information on the item send from the control terminal, and displays information on the item on a screen — 305

The mobile terminal acquires the control instruction input by the user, the control instruction carrying at least one kind of operation type, and sends the control instruction to the control terminal — 306

The control terminal receives the control instruction send from the mobile terminal, and controls the storage box to perform the operation corresponding to the operation type according to the operation type carried in the control instruction — 307

## Fig. 3-1

Fig. 3-2

Fig. 3-3

Fig.3-4

First acquisition
module ⟍ 401

Second acquisition
module ⟍ 402

Sending module ⟍ 403

Fig.4-1

Memory | Processor | Camera

Temperature
sensor | Humidity
sensor | Bacterial
detector

Fig.4-2

Receiving module ⟍ 501

Display module ⟍ 502

Fig.5

Fig. 6

Fig. 7

**EP 2 977 942 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014045433 A
- US 2013015753 A